# EUROPEAN PATENT APPLICATION

(11) **EP 4 456 368 A1**
(43) Date of publication of application: **30.10.2024**
(21) Application number: 24172358.4
(22) Date of filing: 25.04.2024
(51) Int. Cl.: H02J 3/32, H02J 3/38, H02J 3/48

(54) **POWER CONTROL UNIT, POWER GENERATION SYSTEM, AND METHOD FOR CONTROLLING ELECTRIC POWER OF POWER GENERATION SYSTEM COMPRISING HYDROPOWER PLANT OR WIND TURBINE PLANT**

(30) Priority: 25.04.2023 FI 20235455
(71) Applicant: Veo Oy, 65380 Vaasa (FI)
(72) Inventor: KELLONIEMI, Jukka, 96440 ROVANIEMI (FI)
(74) Representative: Berggren Oy

(57) **Abstract**

A power control unit (20) for controlling electric power of a power generator system (100) comprising a hydropower plant (30A) or a wind turbine plant (30B). The system (100) comprises a turbine controller (32), a turbine (34), an electric generator (36), and an electrical energy storage unit (40) which is arranged in parallel with the electric generator (36) with respect to an output of the system (100). The power control unit (20) arranged to be connected to the turbine controller (32) and the electrical energy storage unit (40). The power control unit (20) being configured to determine (310) an electric output power reference of the system (100) based on a frequency (401) at the output (90), and to control (320) an electric output power (402) of the system (100) based on the output electric power reference by a mutual control of the turbine controller (32) and the electrical energy storage unit (40).

## Description

### FIELD OF THE INVENTION

The present invention relates in general to control of electric power generated by power generation systems. In particular, however not exclusively, the present invention concerns a power control unit and a method for controlling electric power of a power generation system comprising a hydropower plant or a wind turbine plant.

### BACKGROUND

Hydropower plants and wind turbine plants include rotating parts, the rotation of which is utilized in electric power generation. Typically, such plants are connected to an electrical power grid so that the generated power can be injected to the grid and thereon transferred and distributed to those who need it, such as industry and residential customers.

An inherent property of an electrical power grid is that the power generation must match power consumption in order to maintain stable frequency, for example, 50 or 60 Hz, in the grid. Traditionally, most of the power generation has been provided by rotating generators, such as including the generators of hydropower plants, which have significant inertia and in which the source of energy, such as fuel or flow of water, is steady and predictable. On the other hand, such power generation units tend to be slow when it comes to adjusting their output power. If the frequency starts to decrease in the grid, there has also been power generation units connected to the grid which are able to react faster, such as gas turbines, in order to ensure stable frequency in the grid.

However, nowadays more and more power generation units having intermittent source of energy, such as solar power or wind turbine plants, are being connected to the grid, thereby increasing the need for frequency control reserves. At the same time as the amount of needed reserves has increased, the time how fast they can react, that is how fast they are able to inject to or draw power from the grid, has become even shorter.

In order to support the frequency in the electrical grid, which tends the change all the time at least to some extent, the turbine plants have to frequently adjust their output. This requires regulating the turbine which requires operating the mechanical devices of the turbine controller. Frequent use of the mechanical control devices, such as related to control of flow of water or pitch of a wind turbine, causes wear and tear, and finally break the device. There is thus a need to develop solutions for providing electrical power to balance the electrical power in order to support the frequency regulation endeavors in the grids.

### SUMMARY

An objective of the present invention is to provide a power control unit, a power generation system, and a method for controlling electric power of a power generation system comprising a hydropower plant or a wind turbine plant. Another objective of the present invention is that the power control unit, the power generation system, and the method at least alleviate some of the drawbacks in the known solutions.

The objectives of the invention are reached by a power control unit, a power generation system, and a method for controlling electric power of a power generation system comprising a hydropower plant or a wind turbine plant as defined by the respective independent claims.

According to a first aspect, a power control unit for controlling electric power of a power generation system comprising a hydropower plant or a wind turbine plant is provided. The system comprises a turbine controller, a turbine, an electric generator, and an electrical energy storage unit which is arranged in parallel with the electric generator with respect to an output of the system, the power control unit arranged to be connected to the turbine controller and the electrical energy storage unit.

The power control unit is configured to determine an electric output power reference of the system based on a frequency at the output, control an electric output power of the system based on the output electric power reference by a mutual control of the turbine controller and the electrical energy storage unit. Said control of the electric output power comprises regulation of power of the electrical energy storage unit as a response to a difference between the electric output power and the electric output power reference within a dead zone of the turbine controller, and regulation of the turbine controller as a response to a difference between the electric output power and the electric output power reference outside the dead zone.

The dead zone is defined as a range around the electric output power reference. Thus, the position of the dead zone changes when the electric output power reference changes.

A position of the dead zone, e.g. with reference to a center point of the range thereof, may be arranged to change at least when the turbine controller is being regulated for changing output power of the turbine and the electric generator.

Defining the dead zone as a range around the electric output power reference means that the position of the dead zone changes when the electric output power reference changes. Thus, the position of the dead zone, even if its magnitude may relate via the pre-defined relation to the output frequency, is indeed around the electric output power reference, not directly around the nominal output frequency nor in a static manner around any value of the output frequency. Thus, in a situation where the change of frequency at the output is high, and the turbine controller is being regulated, the electric output power reference changes and the dead zone also moves with it.

In preferable embodiments, a magnitude of the dead zone is defined based on a relation, preferably pre-defined relation, between a change of frequency at the output and a corresponding change in needed electric power level.

The dead zone may be configured to be adjustable based on a state of charge of the electrical energy storage unit.

In various embodiments, the dead zone may be configured to comprise at least two values being selectively utilized based on the state of charge of the electrical energy storage unit. The at least two values may be different and/or adjustable. For example, optionally, one for cases needing more or prolonged power injection and one for cases needing more or prolonged power absorption.

The selective utilization may include using a first dead zone for injection of electric power from the electrical energy storage unit and a second dead zone for absorption of electric power into the electrical energy storage unit. For example, if the state of charge is low, the second dead zone may be larger than the first dead zone. On the other hand, if the state of charge is high, the first dead zone may be larger than the second dead zone.

In some cases, the first dead zone or the second dead zone may even be configured to be zero based on the state of charge of the electrical energy storage unit, in that a change in the frequency at the output causes the turbine controller to operate since the electrical energy storage unit is not utilizable for injection of power (first dead zone being zero), or in that a change in the frequency of the output causes the turbine controller to operate since the electrical energy storage unit is not utilizable for absorption of power (second dead zone being zero).

The maximum value of the dead zone, or of the first and second dead zones, may be configured based on the maximum power rating of the electrical energy storage unit independent of the state of charge.

In some embodiments, the dead zone may be configured to be both adjustable and limited from the maximum power rating point of view by the maximum power rating of the electrical energy storage unit.

Thus, in various embodiments, the electrical energy storage unit is utilized to inject or absorb electrical power, if a change of frequency in the grid is small, that is within the dead zone. On the other hand, if the change is high, that is, outside the dead zone, the turbine controller is controlled to increase or decrease turbine power, such as via regulating water flow or affecting pitch control in wind turbine plants. Thus, the number of control actions applied to the turbine controller, thus leading to movement of components of the turbine, is reduced since the electrical energy storage handles smaller and typically also more frequent frequency variations.

Furthermore, the power control unit may be configured to monitor a state of charge of the electrical energy storage unit. Thus, the power control unit may be configured to manage the electrical energy storage unit so that it doesn't become too empty or too full.

In various embodiments, the power control unit may be configured to regulate the turbine controller so as to generate more power by the electric generator, if the state of charge is lower than a threshold value. The threshold value may be, for example, 20 or 30 percent. On the other hand, if the state of charge becomes too high, such as 100 percent or over 90 percent, the power control unit may prevent the electrical energy storage unit being charged further.

In various embodiments, the range of the dead zone may be, through, based on or in accordance with said relation, one percent, preferably 0.5 percent, more preferably 0.2 percent, or most preferably 0.1 percent of a nominal frequency value, such as of a fundamental frequency of an electrical grid. The nominal frequency value may be, for example, 50 or 60 Hz, as is known to a skilled person in the art.

In various embodiments, said regulation of the power of the electrical energy storage unit may include the power control unit providing an energy storage power reference value to an energy storage management system of the electrical energy storage unit.

In some embodiments, said regulation of the turbine controller may include the power control unit providing a turbine reference value to the turbine controller.

In addition, the power control unit may be configured to determine, such as to measure or to receive measurement data of, the power of the electrical energy storage unit.

According to a second aspect, a power generation system is provided. The power generation system comprises a hydropower plant or a wind turbine plant. The plant comprising a turbine controller, a turbine, and an electric generator for generating electric power, wherein the electric generator is arranged to be rotated by the turbine of the plant. The power generation system also comprises an electrical energy storage unit arranged in parallel with the electric generator with respect to an output of the system. Furthermore, the power generation system comprises a power control unit in accordance with the first aspect, being connected to the turbine controller and the electrical energy storage unit, and being arranged to determine the power of the electrical energy storage unit and the electric output power of the plant.

According to a third aspect, a method for controlling electric power of a power generation system comprising a hydropower plant or a wind turbine plant is provided. The plant comprising a turbine controller, an electric generator, and an electrical energy storage unit which is arranged in parallel with the electric generator with respect to an output of the system.

The method comprises:
determining, by a power control unit, an electric output power reference of the plant based on a frequency at the output,
controlling, by the power control unit, an electric output power of the plant based on the output electric power reference by a mutual control of the turbine controller and the electrical energy storage unit, wherein said controlling comprises:
   - regulating power of the electrical energy storage unit as a response to a difference between the electric output power and the electric output power reference within a dead zone of the turbine controller, wherein the dead zone is defined as a range around the electric output power reference, and
   - regulating the turbine controller as a response to a difference between the electric output power and the electric output power reference outside the dead zone.

Furthermore, the method may comprise monitoring a state of charge of the electrical energy storage unit. In addition, preferably, the method comprises regulating the turbine controller so as to generate more power by the electric generator, if the state of charge is lower than a threshold value.

Furthermore, alternatively or in addition, the method may comprise adjusting the dead zone based on the state of charge of the electrical energy storage unit.

In various embodiments, the dead zone may be configured to comprise at least two values. The method may comprise selectively utilizing, based on the state of charge of the electrical energy storage unit, one of the at least two values. The at least two values may be different and/or adjustable.

The selective utilization may include using a first dead zone for injection of electric power from the electrical energy storage unit and a second dead zone for absorption of electric power into the electrical energy storage unit. For example, if the state of charge is low, the second dead zone may be larger than the first dead zone. On the other hand, if the state of charge is high, the first dead zone may be larger than the second dead zone.

In various embodiments, a magnitude of the dead zone is defined based on a relation, such as a pre-defined relation, between a change of frequency at the output and a corresponding change in needed electric power level, wherein the magnitude of the dead zone, through, based on, or in accordance with the relation, is one, preferably 0.5, more preferably 0.2, or most preferably 0.1 percent of a nominal frequency value, such as of a fundamental frequency of an electrical grid. As can be understood, "through, based on, or in accordance with the relation" may mean that the dead zone itself may be defined in terms of electric power, that is, be a mapping from the output frequency to the desired power level.

The present invention provides a power control unit, a power generation system, and a method for controlling electric power of a power generation system comprising a hydropower plant or a wind turbine plant. The present invention provides advantages over known solutions that the power generation system may be utilized to rapidly support frequency in the electrical grid even if the operation of the turbine is relative slow. Furthermore, the use of electrical energy storage unit for smaller changes in the frequency avoids the control actions of the slower turbine controller, and thus does not cause wear and tear to mechanical control devices of the turbine, such as to the mechanism(s) related to changing positions of rotating blades etc.

Various other advantages will become clear to a skilled person based on the following detailed description.

The expression "a number of" may herein refer to any positive integer starting from one, being one, two, or three, etc.

The expression "a plurality of" may refer to any positive integer starting from two, being two, at least two, three, or at least three, etc.

The terms "first", "second" and "third" are herein used to distinguish one element from other element, and not to specially prioritize or order them, if not otherwise explicitly stated.

The exemplary embodiments of the present invention presented herein are not to be interpreted to pose limitations to the applicability of the appended claims. The verb "to comprise" is used herein as an open limitation that does not exclude the existence of also unrecited features. The features recited in the appended patent claims are mutually freely combinable unless otherwise explicitly stated.

The novel features which are considered as characteristic of the present invention are set forth in particular in the appended claims. The present invention itself, however, both as to its construction and its method of operation, together with additional objectives and advantages thereof, will be best understood from the following description of specific embodiments when read in connection with the accompanying drawings.

### BRIEF DESCRIPTION OF FIGURES

Some embodiments of the invention are illustrated by way of example, and not by way of limitation, in the figures of the accompanying drawings.
Figures 1A and 1B illustrate schematically power generation systems in accordance with some embodiments.
Figures 2A and 2B illustrates schematically a hydropower plant and a wind power plant, respectively.
Figure 3 shows a flow diagram of a method according to an embodiment.
Figure 4A shows an example of the operation of a prior art power generation system.
Figure 4B shows an example of the operation of the power generation system in accordance with an embodiment of the invention.

### DETAILED DESCRIPTION OF SOME EMBODIMENTS

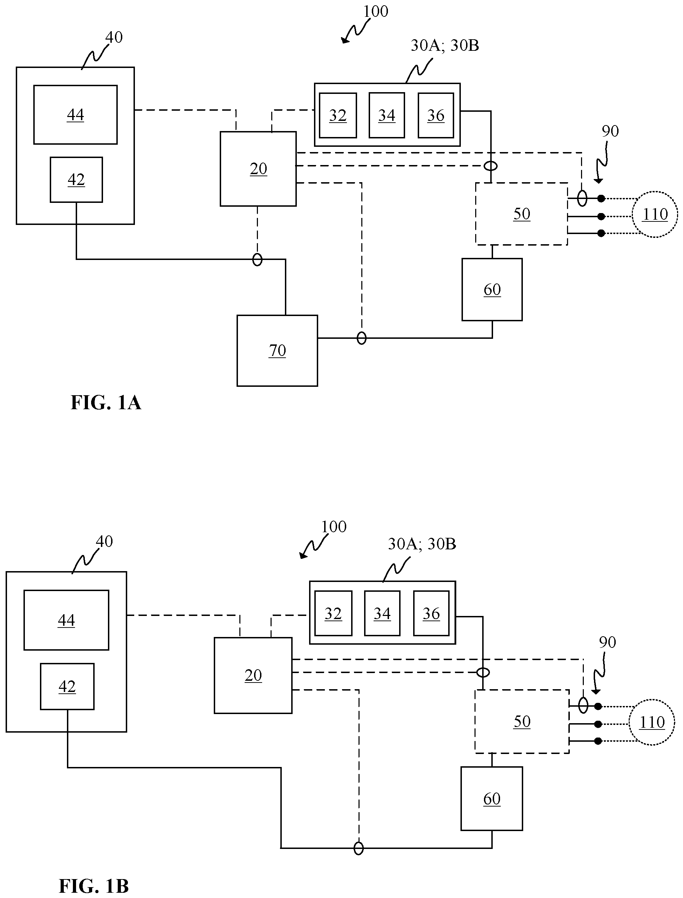

Figures 1A and 1B illustrate schematically power generation systems 100 in accordance with some embodiments. In Figs. 1A and 1B, the power generation system 100 comprises a power generation plant, being a hydropower plant 30A or a wind turbine plant 30B. the plant comprising a turbine controller 32 and a turbine 34. The power generation system 100 also comprises an electric generator 36 for generating electric power, wherein the electric generator is arranged to be rotated by the turbine 34 of the plant 30A; 30B. Furthermore, the power generation system 100 comprises an electrical energy storage unit 40 arranged in parallel with the electric generator 36 with respect to an output 90 of the plant. Still further, the power generation system 100 comprises a power control unit 20 being connected to the turbine controller 32 and the electrical energy storage unit 40, and being arranged to determine, such as measure or to receive as measurement data, the power of the electrical energy storage unit 40 and the electric output power of the plant 30A; 30B.

In various embodiments, the electrical energy storage unit 40 may comprise an energy storage management system 42, such as including an inverter, and an electrical energy storage 44, such as one or more batteries, or one or more supercapacitors, or comprising one or more flywheels, for instance.

In Figs. 1A and 1B, there are also shown an optional first switchgear 50 or the like, which is used as a common point of coupling at the output 90 of the system 100.

In various embodiments, the system 100 may also comprise a transformer 60 for stepping up the voltage of the electrical energy storage unit 40 to the level of the electrical grid 110, such as a three-phase electrical grid.

Figure 1A further shows an optional second switchgear 70, such as a low voltage switchboard. The second switchboard 70 may be utilized to accommodate measurement device for voltage, current, and/or power of the electrical energy storage unit 40.

In Fig. 1B, the second switchgear 70 has been omitted. The energy storage management system 42 of the electrical energy storage unit 40 may thus be directly connected to the transformer 60.

In various embodiments, the power generation system 100 may, preferably, arranged so that electric power may be fed from the electric generator 36 to the electrical energy storage unit 40 without affecting the power fed or drawn from the electrical grid 110 or other electrical load. Thus, in other words, the power generation system 100 comprises an internal electrical connection between the electric generator 36 and the electrical energy storage unit 40.

In various embodiments, the maximum power rating of the electrical energy storage unit 40 may be smaller than the nominal power value of the electric generator 36. In many advantageous embodiments, the maximum power rating of the electrical energy storage unit 40 may be smaller than one tenth or even one twentieth of the nominal power value of the electric generator 36.

In some especially advantageous embodiments, the maximum power rating of the electrical energy storage unit 40 may be smaller than one fortieth of the nominal power value of the electric generator 36. Due to the mutual control of the turbine controller 32 and the electrical energy storage unit 40, as will be explained hereinbelow, the capability of the electrical energy storage unit 40 to inject or absorb power doesn't need to be high. This may be further affected and optimized by the selection of a size of the dead zone.

Various embodiments of the present invention, thus, provide a power control unit 20 for controlling electric power of a hydropower plant 30A or a wind turbine plant 30B. The power control unit 20 is arranged to be connected to the turbine controller 32 and the electrical energy storage unit 40.

In various embodiments, the power control unit 20 may be a separate independent device, such as having its own device housing etc., relative to the turbine controller 32 and the electrical energy storage unit 40. Thus, the power control unit 20 may easily be installed to new or already existing hydropower plants 30A or wind turbine plants 30B, which further comprise an electrical energy storage unit 40 or which can be upgraded to have an electrical energy storage unit 40 substantially at the same time as the power control unit 20 is installed. Thus, old hydropower plants 30A or wind turbine plants 30B can be upgraded to with the power control unit 20 to utilize an electrical energy storage unit 40 as described herein.

In various alternative embodiments, the power control unit 20 may be integrated with the turbine controller 32 or an energy storage management system 42 of the electrical energy storage unit 40, or even with all three of them. For example, a power generation system 100 may be provided which comprises a single control system comprising functionalities of each of the three, that is, the turbine controller 32, the energy storage management system 42, and the power control unit 20. In some other embodiments, the power control unit 20 and the energy storage management system 42 are integrated to each other. In still another embodiment, the power control unit 20 and the turbine controller 32 are integrated to each other.

Figs. 1A and 1B shows an alternative or an additional optional feature according to which the power control unit 20 may be arranged to directly measure current at the output 90, such as via current transformer or transformers, for determining the output power. However, as can be understood, in various embodiments, the power control unit 20 may be configured to determine the output power of the system 100 based on the sum of the power of electric generator 36 and the power of the electrical energy storage unit 40.

According to a non-limiting example, the nominal power rating of the electric generator 36 may be 28 MW, and the power rating of the electrical energy storage 44 only 500 kW, having capacity of 50 kWh.

According to another non-limiting example, the nominal power rating of the electric generator 36 may be 12 MW, and the power rating of the electrical energy storage 44 only 1 MW.

According to still another non-limiting example, the nominal power rating of the electric generator 36 may be 10 MW, and the power rating of the electrical energy storage 44 only 150 kW.

The power control unit 20 is configured to determine an electric output power reference of the plant 30A; 30B based on a frequency at the output 90. Furthermore, the power control unit 20 is configured to control an electric output power of the plant 30A; 30B based on the output electric power reference by a mutual control of the turbine controller 32 and the electrical energy storage unit 40. Said mutual controlling comprises regulation of power of the electrical energy storage unit as a response to a difference between the electric output power and the electric output power reference within a dead zone of the turbine controller 32, and regulation of the turbine controller as a response to a difference between the electric output power and the electric output power reference outside the dead zone.

The dead zone may be defined as a range around the electric output power reference. In preferable embodiments, a magnitude of the dead zone is defined based on a relation, such as a pre-defined relation, between a change of frequency at the output and a corresponding change in needed electric power level. The pre-defined relation may be implemented, for example, but not limited to, by a proportional (P) type of control.

Defining the dead zone as a range around the electric output power reference means that the position of the dead zone changes when the electric output power reference changes. Thus, the position of the dead zone, even if its magnitude may relate via the pre-defined relation to the output frequency, is indeed around the electric output power reference, not directly around the nominal output frequency nor in a static manner around any value of the output frequency. Thus, in a situation where the change of frequency at the output is high, and the turbine controller is being regulated, the electric output power reference changes and the dead zone also moves with it.

The dead zone may thus be defined, through the relation, as a range around the frequency at the output, such as one, preferably 0.5, more preferably 0.2, or most preferably 0.1 percent of a nominal frequency value, such as of a fundamental frequency of an electrical grid, typically being 50 or 60 Hz.

In an example, if the frequency at the output is below a nominal frequency, such as 50 or 60 Hz, and then decreases, the power control unit 20 controls the plant to produce more electric power based on said predefined relation to support the frequency at the output. If the frequency at the output is below the nominal frequency, and then increases, the power control unit may control the plant to produce less power or maintain said level of electric power based on said predefined relation to support the frequency at the output.

The dead zone may be configured to be adjustable based on a state of charge of the electrical energy storage unit.

In various embodiments, the dead zone may be configured to comprise at least two values being selectively utilized based on the state of charge of the electrical energy storage unit. The at least two values may be different and/or adjustable.

The selective utilization may include using a first dead zone for injection of electric power from the electrical energy storage unit and a second dead zone for absorption of electric power into the electrical energy storage unit. For example, if the state of charge is low, the second dead zone may be larger than the first dead zone. On the other hand, if the state of charge is high, the first dead zone may be larger than the second dead zone.

In some cases, the first dead zone or the second dead zone may even be configured to be zero based on the state of charge of the electrical energy storage unit, in that a change in the frequency at the output causes the turbine controller to operate since the electrical energy storage unit is not utilizable for injection of power (first dead zone being zero), or in that a change in the frequency of the output causes the turbine controller to operate since the electrical energy storage unit is not utilizable for absorption of power (second dead zone being zero).

The maximum value of the dead zone, or of the first and second dead zones, may be configured based on the maximum power rating of the electrical energy storage unit independent of the state of charge.

In some embodiments, the dead zone may be configured to be both adjustable and limited from the maximum power rating point of view by the maximum power rating of the electrical energy storage unit.

In various embodiments, the electric output power reference may be determined based on the reference value of the frequency and the determined frequency at the output 90.

The operation of the power control unit 20 may be based on a proportional-integral-derivative control principle, for instance. The proportional-integral-derivative control principle may be used within the dead zone and/or outside the dead zone.

Furthermore, the power control unit 20 may be configured to monitor a state of charge of the electrical energy storage unit 40. Thus, the power control unit 20 may be configured to manage the electrical energy storage unit 40, that is of the electrical energy storage 44, so that it doesn't become too empty or too full.

In various embodiments, the power control unit 20 may be configured to regulate the turbine controller 32 so as to generate more power by the electric generator 36, if the state of charge is lower than a threshold value. The threshold value may be, for example, 20 or 30 percent. On the other hand, if the state of charge becomes too high, such as 100 percent or over 90 percent, the power control unit 20 may prevent the electrical energy storage 44 being charged further.

In various embodiments, said regulation of the power of the electrical energy storage unit 40 may include the power control unit 20 providing the electrical energy storage power reference value to an energy storage management system 42 of the electrical energy storage unit 40.

In some embodiments, said regulation of the turbine controller 32 may include the power control unit 20 providing a turbine reference value to the turbine controller 32.

In addition, the power control unit 20 may be configured to determine, such as to measure or to receive measurement data of, the power of the electrical energy storage unit 40.

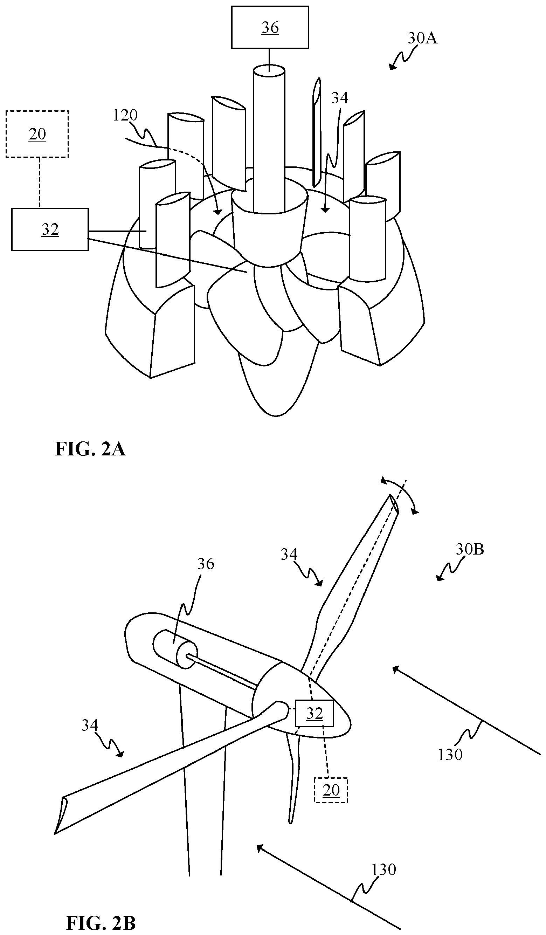

Figures 2A and 2B illustrates schematically a hydropower plant 30A and a wind power plant 30B, respectively. The hydropower plant 30A uses kinetic energy of the flow of water 120 as an energy source. The wind power plant 30B uses the kinetic energy of the wind 130.

The turbine controller 32 in connection with the hydropower plant 30A regulates the flow of water. The flow of water may be regulated by gates, blades or valves or the like. These are depicted in Fig. 2A with the vertical blade-like elements, between which the water flows into the turbine 34.

In various embodiments, the hydropower plant 30A may comprise a Kaplan turbine arrangement, having adjustable, such as rotatable, runner blades and adjustable wicket gate, such as including guide vanes or blades for regulating water flow. Thus, the turbine controller 32 may be arranged to control one or, preferably, both (as shown in Fig. 2A with the two lines from the turbine controller 32) of the adjustable runner blades of the turbine and the adjustable wicket gate, the vanes or blades thereof, for regulating the amount of water flow.

It is to be understood that in many embodiments, the hydropower plant 30A may only have the adjustable runner blades or the adjustable wicket gate, not necessarily both being adjustable. This depends on the type of the turbine.

The turbine controller 32 in connection with the wind power plant 30B regulates the flow of air. The flow of water may be regulated by pitch control methods, such as rotating the blades of the wind turbine around the longitudinal axis of the blades.

As can be realized, the blades of the turbine, whether of hydropower or wind turbine plant, may be turned into both directions, that is to allow more water to the turbine 34 or reducing the flow, or extracting more power from the wind or less power.

Furthermore, in some embodiments, the power control unit 20 is arranged in connection with a plurality of wind turbines plants, such as constituting a wind farm or park. The power control unit 20 may be arranged to control the turbine controllers 32 of the plurality of wind turbines plants. Thus, the controlling may be realized as distributed control system, that is one power control unit 20 in each of the wind turbine plants, or as a centralized control system in which the plurality of wind turbine plants is controlled by a single power control unit 20.

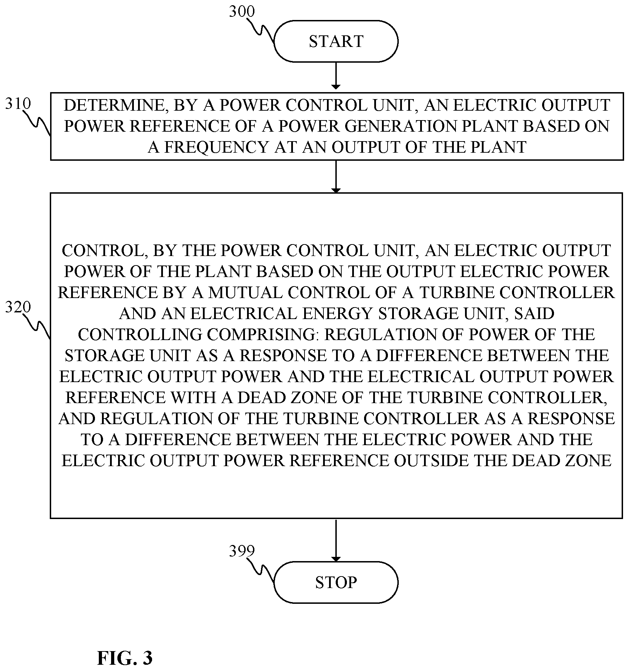

Figure 3 shows a flow diagram of a method according to an embodiment.

Item, or method step, 300 refers to a start-up phase of the method. Suitable equipment and components are obtained and systems assembled and configured for operation.

Item, or method step, 310 refers to determining, by a power control unit 20, an electric output power reference of the plant 30A; 30B based on a frequency at the output 90.

Item, or method step, 320 refers to control an electric output power of the plant 30A; 30B based on the output electric power reference by a mutual control of the turbine controller 32 and the electrical energy storage unit 40, such as the energy storage management system 42. Furthermore, said control comprises regulation of power of the electrical energy storage unit 40 as a response to a difference between the electric output power and the electric output power reference within a dead zone, and regulation of the turbine controller 32 as a response to a difference between the electric output power and the electric output power reference outside the dead zone. The dead zone is defined as a range around the electric output power reference.

Method execution may be stopped at item, or method step, 399.

In various embodiments, the method comprises monitoring a state of charge of the electrical energy storage unit 40. Furthermore, the method may comprise regulating the turbine controller 32 so as to generate more power by the electric generator 36, if the state of charge is lower than a threshold value.

In some embodiments, the range of the dead zone may be one, preferably 0.5, more preferably 0.2, or most preferably 0.1 percent of a nominal frequency value, such as of a fundamental frequency of an electrical grid, for example 50 or 60 Hz.

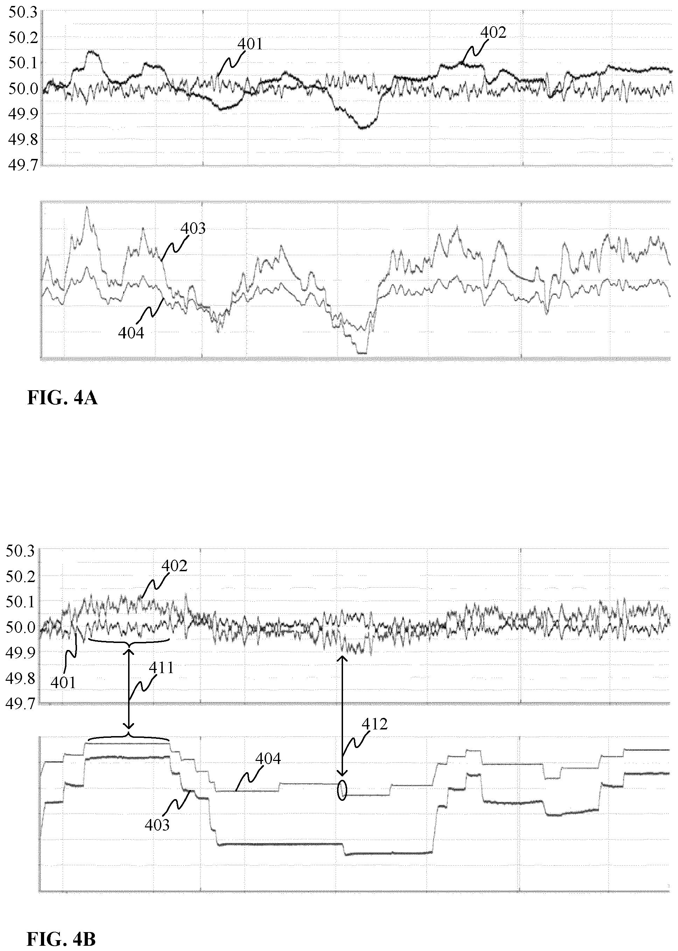

Figure 4A shows an example of the operation of a prior art power generation system. In this particular case, the power generation system comprises a hydropower plant comprising a Kaplan turbine. The horizontal axes represent time and, in this example case, the length of one interval is 15 seconds, making the total time on the graphs to be approximately 1 minute 45 seconds.

In the top portion of Fig. 4A, there is shown frequency 401 at the output of the system. The scale of the frequency 401, as Hz, is shown on the left vertical axis. The other graph is the output power 402 of the generator of the turbine. In the bottom portion of Fig. 4A, there is shown the position of the runner blade 403 of the Kaplan turbine. The other graph is the position of the wicket gate(s) 404 of the Kaplan turbine. As can be seen, in the bottom portion of Fig. 4A, the turbine controller is required to regulate the turbine, that is the position of runner blades 403 and wicket gate(s) 404, very frequently, thereby causing wear and tear to mechanics of the control system.

Figure 4B shows an example of the operation of the power generation system 100 in accordance with various embodiments of the present invention. In this case too, the system 100 comprises a Kaplan turbine, such as in the prior art solution of Fig. 4A. However, the system 100 also comprises an electrical energy storage unit 40 in accordance with an embodiment of the invention. The horizontal axes represent time and, in this example case, the length of one interval is 15 seconds, making the total time on the graphs to be approximately 1 minute 45 seconds, thereby having essentially similar and comparable time frame relative to Fig. 4A.

In the top portion of Fig. 4B, there is shown frequency 401 at the output of the system 100. The scale of the frequency 401 is shown on the left vertical axis. The other graph is the output power 402 of the system 100, that is the total power of the combination of the turbine plant 30A; 30B and the electrical energy storage unit 40. In the bottom portion of Fig. 4B, there is shown the position of the runner blade 403 of the Kaplan turbine. The other graph is the position of the wicket gate(s) 404 of the Kaplan turbine.

As can be seen, the turbine controller 32 performs control actions less frequently than in case of the turbine controller of Fig. 4A. In Fig. 4B, as has been explained hereinbefore, the electrical energy storage unit 40 handles the small frequency variations within the dead zone, and the turbine controller 32 acts only when there is a large enough change in the frequency. It can clearly be seen, when comparing the top portions of Figs. 4A and 4B, that the output power can be varied much faster to the use of electrical energy storage unit 40 than in the prior art solution, thereby providing faster frequency support at the output 90. At the same time, when comparing the bottom portions of Figs. 4A and 4B, it can be seen that the mechanical control portions of the system 100, namely the positions of the runner blades 403 and wicket gate(s) 404, are operated less frequently, thus causing less wear and tear to said mechanical components.

It should be noted that the dead zone is, preferably, not defined by the frequency directly but rather through changes in the frequency, thus affecting the output electric power reference. The dead zone is defined around the current output electric power reference and, thus, the position of the dead zone changes with the changing output electric power reference. This is clearly visible in Fig. 4B. The turbine controller (see graphs 403 and 404) does not react to smaller changes in the frequency 401 since the changes in the frequency are, via the relation between the frequency changes and the output power reference, within the dead zone. The position of the dead zone changes at least when the turbine controller 32 is regulated to change the power output level of the turbine 34 and/or the electric generator 36. What should also be noted based on Fig. 4B is that the output frequency 401 does not always have the same value when the turbine controller 32 acts. This is due to the fact that the dead zone is not directly related to absolute values of the output frequency. There are, in fact, time instances where the turbine controller 32 acts even if the output frequency is close to or at 50 Hz (nominal output frequency). This would not happen if the dead zone would be defined as a frequency range being around the nominal output frequency.

Furthermore, as an example, during time range 411 as shown in the bottom portion of Fig. 4B, the output power 401 of the system 100 varies within the dead zone of the turbine controller 32, thereby the turbine controller 32 does not change it state. At time instance 412, there is shown an incident, to serve as an example, where either the output power 401 changes so that the limits of the dead zone are reached and/or the state of charge (SOC) of the electrical energy storage unit 40 has become such that the dead zone itself become smaller (either due to too low or too high SOC), and so the turbine controller 32 regulates the positions of the runner blades 403 and wicket gate(s) 404.

The scope of the present invention is determined by the appended claims together with the equivalents thereof. A person skilled in the art will appreciate the fact that the disclosed embodiments were constructed for illustrative purposes only, and other arrangements applying many of the above principles could be readily prepared to best suit each potential use scenario.

## Claims

1. A power control unit (20) for controlling electric power of a power generator system (100) comprising a hydropower plant (30A) or a wind turbine plant (30B), the system (100) comprising a turbine controller (32), a turbine (34), an electric generator (36), and an electrical energy storage unit (40) which is arranged in parallel with the electric generator (36) with respect to an output of the system (100), the power control unit (20) arranged to be connected to the turbine controller (32) and the electrical energy storage unit (40), the power control unit (20) being configured to:
determine (310) an electric output power reference of the system (100) based on a frequency (401) at the output (90),
control (320) an electric output power (402) of the system (100) based on the output electric power reference by a mutual control of the turbine controller (32) and the electrical energy storage unit (40), wherein said control (320) comprises:
- regulation of power of the electrical energy storage unit (40) as a response to a difference between the electric output power (402) and the electric output power reference within a dead zone of the turbine controller (32), wherein the dead zone is defined as a range around the electric output power reference, and
- regulation of the turbine controller (32) as a response to a difference between the electric output power (402) and the electric output power reference outside the dead zone.

2. The power control unit (20) of claim 1, configured to monitor a state of charge of the electrical energy storage unit (40).

3. The power control unit (20) of claim 2, wherein a magnitude of the dead zone is defined based on a relation, such as a pre-defined relation, between a change of frequency (401) at the output (90) and a corresponding change in needed electric power level.

4. The power control unit (20) of claim 3, wherein the range of the dead zone is, through the relation, one, preferably 0.5, more preferably 0.2, or most preferably 0.1 percent of a nominal frequency value, such as of a fundamental frequency of an electrical grid.

5. The power control unit (20) of any of claims 1-4, wherein a position of the dead zone changes at least when the turbine controller (32) is regulated for changing output power of the turbine (34) and the electric generator (36).

6. The power control unit (20) of any one of claims 1-5, wherein the dead zone is adjustable based on a state of charge of the electrical energy storage unit (40).

7. The power control unit (20) of any one of claims 2-6, wherein the dead zone is configured to comprise at least two values being selectively utilized based on the state of charge of the electrical energy storage unit (40), optionally one for cases needing more or prolonged power injection and one for cases needing more or prolonged power absorption.

8. The power control unit (20) of any of claims 1-7, wherein said regulation of the power of the electrical energy storage unit (40) includes the power control unit (20) providing an energy storage power reference value to an energy storage management system (42) of the electrical energy storage unit (40).

9. The power control unit (20) of any of claims 1-8, wherein said regulation of the turbine controller (32) includes the power control unit (20) providing a turbine reference value to the turbine controller (32).

10. A power generation system (100) comprising:
a hydropower plant (30A) or a wind turbine plant (30B), the plant (30A; 30B) comprising a turbine controller (32), a turbine (34), and an electric generator (36) for generating electric power, wherein the electric generator (36) is arranged to be rotated by the turbine (34) of the plant (30A; 30B),
an electrical energy storage unit (40) arranged in parallel with the electric generator (36) with respect to an output (90) of the system (100), and
a power control unit (20) of any of claims 1-9, being connected to the turbine controller (32) and the electrical energy storage unit (40), and being arranged to determine the power of the electrical energy storage unit (40) and the electric output power 402) of the plant (30A; 30B).

11. A method for controlling electric power of a power generator system (100) comprising a hydropower plant (30A) or a wind turbine plant (30B), the system (100) comprising a turbine controller (32), a turbine (34), an electric generator (36), and an electrical energy storage unit (40) which is arranged in parallel with the electric generator (36) with respect to an output (90) of the system (100), the method comprising:
determining, by a power control unit, an electric output power reference of the plant based on a frequency at the output,
controlling, by the power control unit, an electric output power of the plant based on the output electric power reference by a mutual control of the turbine controller and the electrical energy storage unit, wherein said controlling comprises:
- regulating power of the electrical energy storage unit as a response to a difference between the electric output power and the electric output power reference within a dead zone of the turbine controller, wherein the dead zone is defined as a range around the electric output power reference, wherein the dead zone is defined as a range around the electric output power reference, and
- regulating the turbine controller as a response to a difference between the electric output power and the electric output power reference outside the dead zone.

12. The method of claim 11, comprising monitoring a state of charge of the electrical energy storage unit.

13. The method of claim 12, comprising regulating the turbine controller so as to generate more power by the electric generator, if the state of charge is lower than a threshold value.

14. The method of any of claims 11-13, wherein a magnitude of the dead zone is defined based on a relation, such as a pre-defined relation, between a change of frequency at the output and a corresponding change in needed electric power level, wherein the magnitude of the dead zone, through the relation, is one, preferably 0.5, more preferably 0.2, or most preferably 0.1 percent of a nominal frequency value, such as of a fundamental frequency of an electrical grid.

15. The method of any of claims 12-14, comprising adjusting the dead zone based on the state of charge of the electrical energy storage unit.
